# NEW EUROPEAN PATENT SPECIFICATION

(11) **EP 0 190 360 B2**
(45) Date of publication and mention of the opposition decision: **15.06.1994**
(45) Mention of the grant of the patent: 23.01.1991
(21) Application number: 85903711.1
(22) Date of filing: 26.07.1985
(51) Int. Cl.: B25J 17/00, B25J 19/00

(54) **INDUSTRIAL ROBOT HAVING HOLLOW ARM STRUCTURE**
INDUSTRIELLER ROBOTER MIT HOHLARMSTRUKTUR
ROBOT INDUSTRIEL A STRUCTURE DE BRAS CREUSE

(30) Priority: 27.07.1984 JP 155177/84; 30.07.1984 JP 157294/84
(43) Date of publication of application: 13.08.1986
(73) Proprietor: FANUC LTD., Minamitsuru-gun, Yamanashi 401-05 (JP)
(72) Inventor: NAKASHIMA, Seiichiro, Tokyo 191 (JP); TOYODA, Kenichi, Tokyo 191 (JP); TORII, Nobutoshi Fuyo Haitsu 308, Tokyo 192 (JP); TERADA, Akihiro, Tokyo 191 (JP); MIZUNO, Hitoshi Fanuc Hino Shataku 307, Tokyo 191 (JP)
(74) Representative: Jackson, Peter Arthur
(86) International application number: JP8500424
(87) International publication number: WO8600846

(56) References cited:
- EP-A- 0 086 054
- EP-A- 0 108 569
- WO-A-85/00315
- FR-A- 2 536 690
- JP-A- 571 693
- JP-A- 5 031 253
- JP-A- 5 357 664
- JP-A- 5 383 265
- JP-A- 5 435 959
- JP-A-49 124 766
- JP-A-52 105 463
- JP-A-57 184 687
- JP-B- 4 937 140
- JP-B- 5 028 711
- JP-Y- 4 844 948

## Description

The present invention relates to an industrial robot and, more particularly, to a hollow arm structure for an industrial robot, constructed so that tubes, such as supply tubes for supplying paint and compressed air, or cables, such as a welding cable, can extend through the interior of the hollow arm along the shortest path to a robot work unit, such as a spray gun or a welding head, attached to the forepart of the robot wrist.

Employment of industrial robots for saving labor in painting work and welding work has been on a rising trend. The basic construction of the industrial robot comprises a robot body, a swingable upper arm extending upward from the robot body, a lateral forearm pivotally joined to the swingable upper arm, a robot wrist provided on the forepart of the lateral forearm, and a robot work unit attached to the robot wrist. The painting robot and the welding robot have a common feature wherein tubes for supplying paint and compressed air and cables for supplying welding electric power are used therein, respectively. In the conventional industrial robot, the tubes and the cables are entwined loosely around the upper arm and forearm thereof in a surplus length. However, entwining tubes or wires around the robot arm requires unnecessarily long tubes or cables, which are useless from the viewpoint of robot work and, in the case of a painting robot, a large amount of solvent is used for washing the paint remaining in the paint supply tube and much paint is wasted in changing the paint for paint of a different color.

Accordingly, it is desired that, in the industrial robot which needs tubes and/or cables for painting work or welding work, the quantity of the tubes and/or cables be reduced to the least necessary extent so that the tubes and/or cables are not wasted uselessly and that the robot work unit, such as a spray gun or a welding head, and its vicinity are cleared of tubes and cables so that unexpected trouble due to the loosening of the tubes and cables is avoided. Accordingly, it is an object of the present invention to provide a hollow arm structure for an industrial robot.

EP-A-0086054 discloses an industrial robot provided with a hollow arm structure comprising a tubular casing supported on the forepart of a robot upper arm so as to be turnable about an axis perpendicular to the longitucal axis of the robot upper arm; a hollow outer tube rotatably supported at the rear end thereof within the casing so as to project outside from the forepart of the casing; a hollow wrist unit held on the forepart of the hollow outer tube; a plurality of hollow tubes inserted in the hollow outer tube so as to be coaxial with the hollow outer tube and supported rotatably on the hollow outer tube; hollow transmission gears connected to the respective rear ends of the hollow tubes and the hollow outer tube, respectively; gear members rotatably provided within the rear portion of the casing and being in mesh with the hollow transmission gears connected to the respective rear ends of the hollow tubes and the hollow outer tube, respectively; and hollow transmission gear members attached to the respective front ends of the hollow tubes, respectively, to transmit rotative driving force to the wrist unit; and, according to the invention, such a robot is characterised in that the hollow transmission gear members attached to the respective front ends of the hollow tubes are connected to the respective front ends of the hollow tubes with shear bolts which are capable of being sheared off when subjected to a predetermined shearing load; in that the hollow tubes comprise a thicker hollow intermediate tube and a thinner hollow inner tube fitting one within the other; in that a cover of the wrist unit is fixed at the rear end thereof by bolts to the front end of the hollow outer tube, the wrist unit being provided with a curved hollow pipe member, which is provided at the rear end thereof with a hollow transmission gear member rotatably supported within the cover and being in mesh with the hollow transmission gear member attached to the front end of the thicker hollow intermediate tube; in that another curved pipe and a wrist flange are supported rotatably within the rear end portion and the front end portion of the curved hollow pipe member, with the forepart of the wrist flange projecting outside from the front ends of the hollow tubes and arranged to hold a robot work unit; in that a hollow transmission gear member is provided on the rear end of the another curved pipe so as to be in mesh with the hollow transmission gear member attached to the front end of the thinner hollow inner tube; in that a hollow transmission gear member is provided on the front end of the another curved pipe so as to be in mesh with a hollow transmission gear member provided on the rear end of the wrist flange; and in that the hollow transmission gears (24a,18a,21a) are connected by bolts to the respective rear ends of the hollow tubes and hollow outer tube.

In the accompanying drawings:
Figure 1 is a schematic illustration showing the mechanism of a hollow arm structure for an industrial robot, in a preferred embodiment, according to the present invention; and
Figure 2 is a perspective view showing the general constitution of an industrial robot provided with the hollow arm structure of Fig. 1.

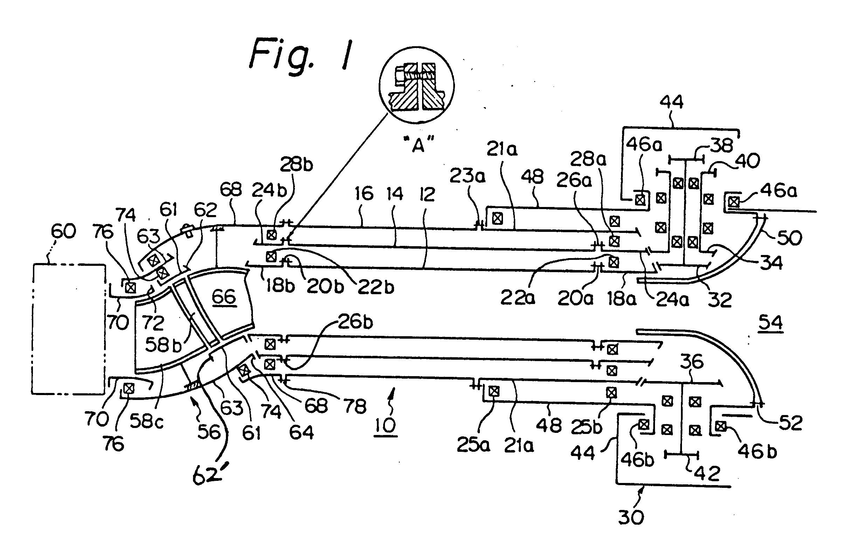

Referring to Fig. 1, a hollow arm 10 of the present invention is joined at the rear end to a joint 30 and connected at the front end to a robot work unit 60. Rotative driving force is transmitted to the hollow arm 10 through a transmission gear mechanism comprising a coaxial arrangement of an inner bevel gear 32, an intermediate bevel gear 34 and an outer bevel gear 36. Predetermined rotative forces are transmitted through a pulley 38 to the inner bevel gear 32, through a pulley 40 to the intermediate bevel gear 34 and through a pulley 42 to the outer bevel gear 36, respectively, from the robot upper arm. The joint 30 is provided with a case 44, on which the hollow arm 10 is supported in bearings 46a and 46b by means of a supporting case 48 for turning motion.

The hollow arm 10 has a hollow inner tube 12, a hollow intermediate tube 14 and a hollow outer tube 16. The respective lengths of the inner tube 12, the intermediate tube 14 and the outer tube 16 are selectively and appropriately decided according to a desired arm length. These tubes 12, 14 and 16 fit coaxially one within another, namely, the tube 14 within the tube 16, and the tube 12 within the tube 14. Bevel gears 18a and 18b are connected to the opposite ends of the inner tube 12 with fastening bolts 20a and 20b, respectively, and the bevel gears are supported rotatably in antifriction bearings 22a and 22b, respectively, and hence the inner tube 12 rotates together with the bevel gears 18a and 18b. The fastening bolts 20b are shear bolts. As will be described later, the interior of the innertube 12 provides a space for accommodating tubes and/or cables. Suitable sealing members, such s tetrafluoroethylene O-rings, are provided at the joints between the inner tube 12 and the bevel gears 18a and 18b fastened together with the fastening bolts 20a and 20b, to prevent a leak of the lubricant lubricating the antifriction bearings 22a and 22b into the interior of the inner tube 12.The bevel gear 18a is in mesh with a bevel gear 32 provided within the joint 30, and thereby a rotative driving force is transmitted from the bevel gear 32 through the bevel gear 18a and the inner tube 12 to the bevel gear 18b.

Similarly, transmission bevel gears 24a and 24b are connected to the opposite ends of the intermediate tube 14 with fastening bolts 26a and 26b and are supported in antifriction bearings 28a and 28b, respectively, and thereby the intermediate tube 14 rotates together with the bevel gears 24a and 24b. The bevel gear 24a is in mesh with an intermediate bevel gear 34 provided within the joint 30. The fastening bolts 26a, si mi larto the fastening bolts 20b, are shear bolts.

A bevel gear 21a is connected to one end of the outer tube 16 near the joint 30 with fastening bolts 23a, is in mesh with an outer bevel gear 36 provided within the joint 30 and is supported rotatably in bearings 25a and 25b. Accordingly, a rotative driving force is transmitted from the bevel gear 36 of the joint 30 through the bevel gear 21 a to the outer tube 16 to rotate the outer tube 16 together with the bevel gear 21a.

Thus, the inner tube 12, the intermediate tube 14 and the outer tube 16 forming the hollow arm 10 are driven for rotation by the joint 30 through the transmission mechanism comprising the bevel gears. The respective quantities of turning motion of the inner tube 12, the intermediate tube 14 and the outer tube 16 can be regulated by controlling the transmission mechanism. The bevel gears 32, 34, 36, 18a, 21 a and 24a are lubricated beforehand with lubricating grease. A funnel-shaped sealing pipe 50 formed of a material having the property of a solid lubricant, such as Teflon (Registered Trade Mark), is mounted on one end of the joint 30 and is fixed at the periphery to one end of the case 44 of the joint 30 with fastening bolts 52 to prevent the lubricating grease from leaking into and smearing the hollow interior of the inner tube 12 and the bevel gear 18a, to seal the transmission mechanism and to form an opening 54 communicating with the hollow interior of the inner tube 12. The inner end of the sealing pipe 50 is in sealing contact with the inner circumference of the bevel gear 18a. Since the sealing pipe 50 has the property of a solid lubricant, the inner end of the sealing pipe 50 engages the inner circumference of the bevel gear 18a smoothly for sealing function.

On the other hand, the hollow arm 10 transmits rotative driving force through the bevel gears 18b and 24b to a hollow wrist unit 56, and then the hollow wrist unit 56 transmits a desired rotation to the robot work unit 60 to control the position of the robot work unit 60 in a three-dimensional space. The hollow wrist unit 56 is internally provided with curved sealing pipes 58a, 58b and 58c formed of the same material as that of the sealing pipe 50 to seal the hollow interior of the hollow wrist unit 56 from the lubricating grease lubricating a gear train having bevel gears formed in curved pipes 61 and 63 of the hollow wrist unit 56 and meshing with the bevel gears 18b and 24b of the hollow arm 10, respectively. The curved sealing pipes 58a, 58b and 58c form a hollow chamber 66 communicating with the hollow interior of the hollow arm 10 and opening into the robot work unit 60. A cover 68 of the hollow wrist unit 56 is connected to the outer tube 16 with bolts. The curved sealing pipe 58a is fixed to the cover pipe 68 by suitable means, such as a fixing rib; the curved sealing pipe 58c is fixed to the bevel gear 64 having a curved body by a similar means. A bevel gear 62' attached to the front end of the curved pipe 61 is in mesh with a bevel gear 72 provided at the inner end of a wrist flange 70 to transmit rotative driving force to the wrist flange 70.

This constitution of the hollow arm 10 enables the utilization of the hollow interior of the hollow arm 10 as a space for wiring and piping. When the hollow arm 10 is applied to a painting robot, for instance, a paint supply tube and a compressed air supply tube are inserted through the opening 54 of the sealing pipe 50, and then the same are extended through the hollow interior of the hollow arm 10 and further through the hollow chamber 66 of the hollow wrist 56 and an opening formed in the wrist flange 70 to the robot work unit, namely, a spray gun, to supply paint and compressed air to the spray gun.

The wrist unit 56 and the robot work unit 60 are driven for rotary motion according to the rotary motion of the outer tube 16 and the cover 68 of the forearm, the rotary motion of the intermediate tube 14 and the curved pipe 63, and the rotary motion of the thinnest inner tube 12, the curved pipe 61 and the wrist flange 70.

When the robot work unit 60 is subjected to an excessive load, the excessive load is transmitted through the curved pipe 63 and the bevel gear 64 attached to the rear end of the curved pipe 63 to the bevel gear 24b attached to the front end of the intermediate tube 14, and also through the wrist flange 70, the curved pipe 61 and a bevel gear 62 attached to the rear end of the curved pipe 61 to the bevel gear 18b attached to the front end of the thinnest inner tube 12. In order to limit the damage to the components of the industrial robot due to such an excessive load to the least extent, the inner tubes 12 and 14 and the bevel gears 18b and 24b are fastened together with the shear bolts 20b and 26b, respectively.

When the above-mentioned excessive load reaches a fixed value, the shear bolts 20b and 26b are sheared, and thereby damage to the rest of the components of the industrial robot is avoided. The wrist unit 56 is held by the cover 68 even if the shear bolts 20b and 26b are sheared off, therefore, the wrist unit 56 and the robot work unit 60 will not fall off the robot arm. When the shear bolts 20b and 26b are sheared off, the shear bolts 20b and 26b can be simply replaced with new ones by removing the bolts 78 fixing the cover 68 to the outer tube 16. Enlarged detail A in Fig. 1 illustrates the manner of connection by means of shear bolts.

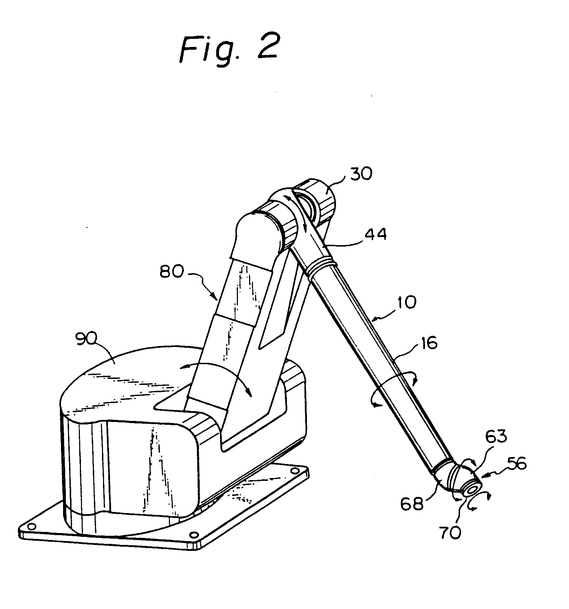

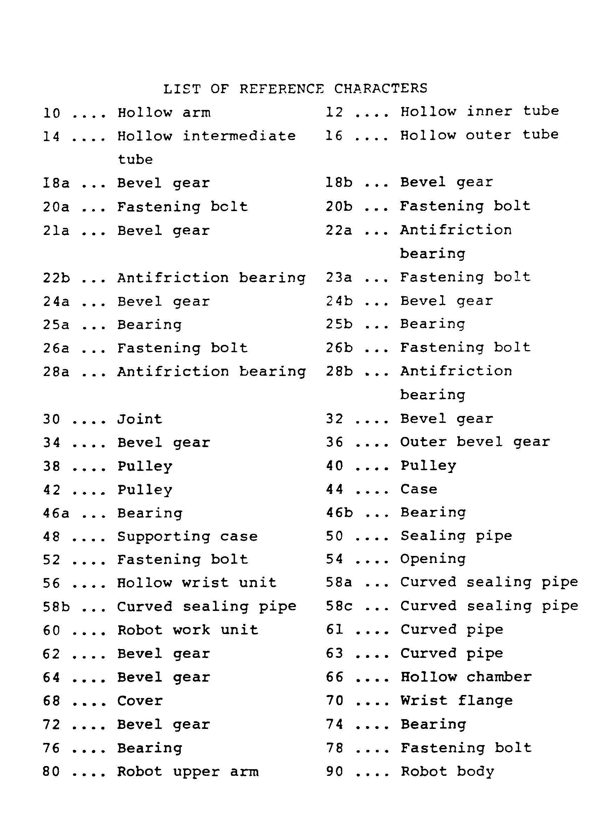

Figure 2 illustrates an industrial robot employing the hollow arm 10 as a robot forearm, in which the hollow arm 10 is joined pivotally to the joint 30 of a robot upper arm 80, while the robot upper arm 80 is joined pivotally to a robot body 90. A robot work unit 60, such as a spray gun or a welding head, is attached to the wrist unit 56.

When a painting robot or a welding robot is provided with the hollow arm structure of the present invention, necessary wiring and piping are formed along the shortest path instead of entwining tubes and/orwires around a robot arm with a surplus length which is unnecessary from the viewpoint of robot work, and the robot work unit, such as a spray gun or a welding head, and its vicinity are cleared of tubes and/orwires. Accordingly, the possibility of unexpected trouble and accidents attributable to the loosening and entanglement of the tubes and/or wires is eliminated, and thereby the safety of the industrial robot is improved. Furthermore, in changing the paint for paint of a different color, the amount of the waste paint to be washed out is reduced to the minimum necessary amount. Furthermore, when the wrist unit is subjected to an excessive load, the shear bolts or the shear pins are sheared off, and thereby damage to the components of the industrial robot is limited to the least extent. Thus, the present invention provides an industrial robot extremely well protected from damage.

## Claims

1. An industrial robot provided with a hollow arm structure comprising a tubular casing (44) supported on the forepart of a robot upper arm so as to be turnable about an axis perpendicular to the longitudinal axis of the robot upper arm; a hollow outer tube (16) rotatably supported at the rear end thereof within the casing so as to project outside from the forepart of the casing; a hollow wrist unit (56) held on the forepart of the hollow outer tube; a plurality of hollow tubes (14,12) inserted in the hollow outer tube so as to be coaxial with the hollow outer tube (16) and supported rotatably on the hollow outer tube; hollow transmission gears (24a,18a,21a) connected to the respective rear ends of the hollow tubes and the hollow outer tube, respectively; gear members (34,32,36) rotatably provided within the rear portion of the casing and being in mesh with the hollow transmission gears connected to the respective rear ends of the hollow tubes and the hollow outertube, respectively; and hollow transmission gear members (24b,18b) attached to the respective front ends of the hollow tubes, respectively, to transmit rotative driving force to the wrist unit; characterised in that the hollow transmission gear members (24b,18b) attached to the respective front ends of the hollow tubes (14,12) are connected to the respective front ends of the hollow tubes with shear bolts (26b,20b) which are capable of being sheared off when subjected to a predetermined shearing load; in that the hollow tubes (14,12) comprise a thicker hollow intermediate tube (14) and a thinner hollow innertube (12) fitting one within the other; in that a cover (68) of the wrist unit (56) is fixed at the rear end thereof by bolts (78) to the front end of the hollow outer tube (16), the wrist unit being provided with a curved hollow pipe member (63), which is provided at the rear end thereof with a hollow transmission gear member (64) rotatably supported within the cover and being in mesh with the hollow transmission gear member (24b) attached to the front end of the thicker hollow intermediate tube (14); in that another curved pipe (61) and a wrist flange (70) are supported rotatably within the rear end portion and the front end portion of the curved hollow pipe member (63), with the forepart of the wrist flange projecting outside from the front ends of the hollow tubes and arranged to hold a robot work unit; in that a hollow transmission gear member (62) is provided on the rear end of the another curved pipe (61) so as to be in mesh with the hollow transmission gear member (18b) attached to the front end of the thinner hollow inner tube (12); in that a hollow transmission gear member (62') is provided on the front end of the another curved pipe (61) so as to be in mesh with a hollow transmission gear member (72) provided on the rear end of the wrist flange (70); and in that the hollow transmission gears (24a,18a,21a) are connected by bolts to the respective rear ends of the hollow tubes (14,12) and the hollow outer tube (16).

## Patentansprüche

1. Industrieller Roboter mit einer Hohlarmstruktur, bestehend aus einem rohrförmigen Gehäuse (44), welches am Vorderteil eines Roboter-Oberarms um eine Achse senkrecht zur Längsachse des Roboter-Oberarms drehbar gelagert ist; einem hohlen äußeren Rohr (16), welches an seinem hinteren Ende innerhalb des Gehäuses drehbar gelagert ist und sich vom Vorderteil des Gehäuses nach außen erstreckt; einer hohlen Handgelenkeinheit (56), die am Vorderteil des hohlen äußeren Rohrs gehalten ist; einer Vielzahl hohler Rohre (14,12), die koaxial zum äußeren hohlen Rohr (16) in dieses eingesetzt sind und drehbar am äußeren hohlen Rohr (16) gelagert sind; hohlen Übertragungsverzahnungen (24a, 18a, 21a), die an den jeweiligen hinteren Enden der hohlen Rohre und dem äußeren hohlen Rohr befestigt sind; innerhalb des hinteren Teils des Gehäuses drehbar angeordneten und mit den hohlen Übertragungsverzahnungen, die jeweils mit den hinteren Enden der hohlen Rohre und des hohlen äußeren Rohrs verbunden sind, kämmenden Getriebeelementen (34, 32, 36); sowie jeweils an den jeweiligen Vorderenden der hohlen Rohre befestigten hohlen Transmissionsgetriebeelementen (24b, 18b), run eine Antriebsdrehkraft auf die Handgelenkeinheit zu übertragen, dadurch gekennzeichnet, daß die an den jeweiligen Vorderenden der hohlen Rohre (14, 12) angebrachten hohlen Transmissionsgetriebeelemente (24b, 18b) mit diesen jeweiligen Vorderenden der hohlen Tuben mittels Scherbolzen (26b, 20b) verbunden sind, die dann, wenn sie einer vorgegebenen Scherbelastung unterworfen werden, abscheren; daß die hohlen Rohre (14, 12) ein dickeres hohles Zwischenrohr (14) und ein dünneres hohles inneres Rohr(12) umfassen, die ineinandergefügt sind; daß eine Abdeckung (68) der Handgelenkeinheit (56) an deren hinterem Ende mittels Bolzen (78) am vorderen Ende des hohlen äußeren Rohres (16) befestigt ist, wobei die Handgelenkeinheit ein gekrümmtes hohles Röhrenteil (63) umfaßt, welches an seinem hinteren Ende mit einem hohlen drehbar innerhalb der Abdeckung gelagerten und mit dem hohlen Transmissionsgetriebe- element (24b), welches am vorderen Ende des dickeren hohlen Zwischenrohrs (14) befestigt ist, kämmenden Transmissionsgetriebeelement (64) versehen ist, daß eine weitere gekrümmte Röhre (61) und ein Handgelenkflansch (70) drehbar innerhalb des rückwärtigen Endteils und des vorderen Endteils des gekrümmten hohlen Röhrenteils (63) gelagert sind, wobei der Vorderteil des Handgelenkflansches sich von den vorderen Enden der hohlen Rohre nach außen vorspringend erstreckt und zur Halterung einer Roboterarbeitseinheit angeordnet ist; daß am rückwärtigen Ende der weiteren gekrümmten Röhre (61) ein hohles Transmissionsgetriebeelement (62) angeordnet ist und mit dem hohlen Transmissionsgetriebeelement (18b) kämmt, welches am vorderen Ende des dünneren hohlen inneren Rohres (12) befestigt ist; daß ein hohles Transmissionsgetriebeelement (62') am vorderen Ende der weiteren gekrümmten Röhre (61) so angeordnet ist, daß es mit einem hohlen Transmissionsgetriebeelement (72) kämmt, welches am rückwärtigen Ende des Handgelenkflansches (70) vorgesehen ist; und daß die hohlen Übertragungsverzahnungen (24a, 18a, 21a) mit Bolzen an den jeweiligen rückwärtigem Enden der hohlen Rohre (14, 12) und des hohlen äußeren Rohrs (16) befestigt sind.

## Revendications

1. Robot industriel muni d'une structure à bras creux comprenant un boîtier tubulaire (44) porté par la partie avant du bras supérieur d'un robot de façon à pouvoir tourner autour d'un axe perpendiculaire à l'axe longitudinal du bras supérieur du robot; un tube extérieur creux (16) porté de façon à pouvoir tourner à son extrémité arrière dans le boîtier, de façon à se projeter à l'extérieur à partir de l'avant du boîtier; un ensemble creux formant poignet (56) porté par la partie avant du tube extérieur creux; plusieurs tubes creux (14, 12) insérés dans le tube extérieur creux coaxia- lement au tube extérieur creux (16), et portés de façon à pouvoir tourner sur le tube extérieur creux; des engrenages de transmission creux (24a, 18a, 21 a) reliés aux extrémités arrière respectives des tubes creux et du tube extérieur creux respectivement; des pièces d'engrenage (34, 32, 36) montées de façon à pouvoir tourner à l'intérieur de la partie arrière du boîtier, et engrenant avec les engrenages creux de transmission reliés aux extrémités arrière respectives des tubes creux et du tube extérieur creux, respectivement; et des pièces d'engrenages de transmission creuses (24b, 18b) fixées aux extremités avant respectives des tubes creux, respectivement, pour transmettre la force d'entraînement en rotation à l'ensemble formant poignet; caractérisé en ce que les pièces d'engrenages de transmission creuses (24b, 18b) fixées aux extrémités avant respectives des tubes creux (14, 12) sont reliées aux extrémités avant respectives des tubes creux par des boulons à cisaillement (26b, 20b) qui peuvent être coupés par cisaillement lorsqu'ils sont soumis à une charge de cisaillement prédéterminée; en ce que les tubes creux (14, 12) comprennent un tube intermédiaire creux plus épais (14) et un tube intérieur creux plus mince (12) s'adaptant l'un dans l'autre; en ce qu'un couvercle (68) de l'ensemble formant poignet (56) est fixé à son extrémité arrière par des boulons (78) à l'extrémité avant du tube extérieur creux (16), l'ensemble formant poignet étant pourvu d'un élément de tuyau creux incurvé (63), qui est placé à son extrémité arrière avec une pièce d'engrenage de transmission creuse (64), portée de façon à pouvoir tourner à l'intérieur du couvercle, et engrenant avec la pièce d'engrenage de transmission creuse (24b) fixée à l'extrémité avant du tube intermédiaire creux plus épais (14); en ce qu'un autre tuyau incurvé (61) et une bride de poignet (70) sont portés de façon à pouvoir tourner à l'intérieur de la partie d'extrémité arrière et de la partie d'extrémité avant de l'élément de tuyau creux incurvé (63), la partie avant de la bride de poignet faisant saillie des extrémités avant des tubes creux et étant conçue pour tenir une pièce de travail de robot; en ce qu'une pièce d'engrenage de transmission creuse (62) est prévue sur l'extrémité arrière de l'autre tuyau incurvé (61), de façon à engrener avec la pièce d'engrenage de transmission creuse (18b) fixée à l'extrémité avant du tube intérieur creux plus mince (12); en ce qu'une pièce d'engrenage de transmission creuse (62') est prévue sur l'extrémité avant de l'autre tuyau incurvé (61) de façon à engrener sur une pièce d'engrenage de transmission creuse (72) prévue sur l'extrémité arrière de la bride de poignet (70); et en ce que les engrenages creux de transmission (24a, 18a, 21 a) sont reliés par des boulons aux extrémités arrière respectives des tubes creux (14, 12) et du tube extérieur creux (16).
